(19) Europäisches Patentamt
European Patent Office
Office européen des brevets

(11) **EP 1 586 870 B1**

(12) **EUROPÄISCHE PATENTSCHRIFT**

(45) Veröffentlichungstag und Bekanntmachung des Hinweises auf die Patenterteilung:
**27.08.2008   Patentblatt 2008/35**

(51) Int Cl.:
*G01F 1/60* *(2006.01)*

(21) Anmeldenummer: **05003170.7**

(22) Anmeldetag: **15.02.2005**

(54) **Magnetisch-induktives Durchflussmessverfahren und magnetisch-induktives Durchflussmessgerät**

Method for magnetic-inductive measurement of fluid flow and magnetic-inductive flowmeter

Procédé pour la mesure magnéto-inductive d'un débit et débitmètre magnéto-inductif

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.04.2004   DE 102004019189**

(43) Veröffentlichungstag der Anmeldung:
**19.10.2005   Patentblatt 2005/42**

(73) Patentinhaber: **Krohne AG**
**4019 Basel (CH)**

(72) Erfinder: **Leendert van Willigen, Arnould**
**2901 KC Capelle aan den Ijssel (NL)**

(74) Vertreter: **Gesthuysen, von Rohr & Eggert**
**Postfach 10 13 54**
**45013 Essen (DE)**

(56) Entgegenhaltungen:
**DE-A1- 10 118 001          US-A- 4 236 410**
**US-A- 5 503 026**

• **PATENT ABSTRACTS OF JAPAN Bd. 1996, Nr. 05, 31. Mai 1996 (1996-05-31) & JP 08 014971 A (YAMATAKE HONEYWELL CO LTD), 19. Januar 1996 (1996-01-19)**

**Beschreibung**

Die Erfindung betrifft ein magnetisch-induktives Durchflußmeßverfahren zur Messung des Durchflusses eines strömenden Mediums durch ein Meßrohr, wobei mit Hilfe wenigstens einer Magnetspule ein Magnetfeld erzeugt wird, das eine senkrecht zur Meßrohrachse verlaufende Magnetfeldkomponente aufweist, der elektrische Widerstand der Magnetspule gemessen wird und als erste Temperatur die Temperatur der Magnetspule auf der Grundlage des gemessenen Widerstands der Magnetspule berechnet wird. Die Erfindung betrifft ferner ein magnetisch-induktives Durchflußmeßgerät, zur Messung des Volumendurchflusses eines durch ein Meßrohr strömenden Mediums, mit einer Magnetspule zur Erzeugung eines das Meßrohr durchsetzenden Magnetfelds mit einer senkrecht zur Strömungsrichtung verlaufenden Magnetfeldkomponente und einer Ausgabeeinrichtung zur Ausgabe der auf der Grundlage des gemessenen elektrischen Widerstands der Magnetspule berechneten Temperatur der Magnetspule als erste Temperatur.

Ein magnetisch-induktives Durchflußmeßverfahren sowie ein magnetisch-induktives Durchflußmeßgerät der eingangs genannten Art sind z. B. aus der JP 08014971 A bekannt. Dort ist beschrieben, bei einem magnetisch-induktiven Durchflußmeßgerät die Spulentemperatur über die an der Magnetspule anliegende Spannung zu ermitteln. Auf diese Weise sollen Änderungen des Durchflusses berücksichtigt werden, die von Temperaturänderungen des durch das Meßrohr fließenden Mediums herrühren.

Allgemein sind magnetisch-induktive Durchflußmeßverfahren sowie magnetisch-induktive Durchflußmeßgeräte schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei bereits auf Faraday zurück, der im Jahre 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß mittels einer Magnetspule ein Magnetfeld erzeugt wird, das eine Magnetfeldkomponente aufweist, die senkrecht zur Strömungsrichtung verläuft. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten dabei derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung und der über den Querschnitt des Meßrohrs gemittelten Strömungsgeschwindigkeit des Mediums, d. h. zwischen Meßspannung und Volumenstrom.

Teilweise sind magnetisch-induktive Durchflußmeßgeräte verfügbar, die über eine sogenannte Leerlaufdetektion verfügen, also dem Verwender eine Information über den Füllzustand des Meßrohrs geben. Weiterhin sind solche magnetisch-induktiven Durchflußmeßgeräte bekannt, die dem Verwender eine Information über die Zusammensetzung des durch das Meßrohr strömenden Mediums bezüglich der Kriterien "flüssig" und "gasförmig" geben. Dies ist insbesondere zur korrekten Durchflußmessung bei stark schäumenden Medien erforderlich.

Weiterhin ist aus der US 4,651,286 ein magnetisch-induktives Durchflußmeßgerät bekannt, das eine Warneinrichtung aufweist, um eine Warnung ausgeben zu können, wenn die Magnetspule des magnetisch-induktiven Durchflußmeßgeräts offen oder kurzgeschlossen ist. Schließlich sind aus der DE 101 18 001 C2 ein magnetisch-induktives Durchflußmeßgerät und ein Verfahren zum Betreiben dieses Durchflußmeßgeräts bekannt, bei denen die Temperatur der Magnetspule auf der Grundlage der gemessenen Impedanz der Magnetspule bestimmt wird und eine Abschaltvorrichtung vorgesehen ist, mit der die Stromversorgung der Magnetspule abgeschaltet wird, wenn die Temperatur der Magnetspule einen vorbestimmten Temperaturwert übersteigt. Auf diese Weise sollen temperaturbedingte Beschädigungen des magnetisch-induktiven Durchflußmeßgeräts, insbesondere dessen Magnetspulen, verhindert werden, ohne daß ein zusätzlicher Temperatursensor erforderlich ist.

Es ist die Aufgabe der Erfindung, ein magnetisch-induktives Durchflußmeßverfahren sowie ein magnetisch-induktives Durchflußmeßgerät anzugeben, mit denen dem Verwender ein Zusatznutzen zur Verfügung gestellt werden kann, nämlich insbesondere auf einfache und verläßliche Weise eine Information über die Temperatur des durch das Meßrohr strömenden Mediums gegeben werden kann.

Die zuvor aufgezeigte Aufgabe ist ausgehend von dem eingangs beschriebenen magnetisch-induktiven Durchflußmeßverfahren dadurch gelöst, daß als zweite Temperatur die Temperatur an einem von dem Ort der Magnetspule verschiedenen Ort bestimmt wird und auf der Grundlage der ersten Temperatur und der zweiten Temperatur die Temperatur des strömenden Mediums bestimmt wird.

Erfindungswesentlich ist also, daß neben der auf der Grundlage des elektrischen Widerstands der Magnetspule bestimmten Temperatur der Magnetspule eine zweite Temperatur bestimmt wird, und zwar an einem von dem Ort der Magnetspule verschiedenen Ort. Dabei kann die Bestimmung der zweiten Temperatur "unmittelbar" oder "mittelbar" erfolgen, was bedeutet, daß eine unmittelbare Temperaturmessung oder eine mittelbare Bestimmung der Temperatur über einen anderen, von der Temperatur abhängigen Wert, ähnlich wie die Bestimmung der Temperatur der Magnetspule über deren elektrischen Widerstand, erfolgt. Dadurch daß die zweite Temperatur an einem von dem Ort der Magnetspule verschiedenen Ort bestimmt wird, wird man in der Regel immer der Effekt erhalten, daß die zweite Temperatur anders von der Temperatur des Mediums oder/und der Umgebungstemperatur abhängt als die erste, über den elektrischen Widerstand der Magnetspule bestimmte Temperatur. Dies hat zur Folge, daß über die erste Temperatur und die zweite Temperatur auf die Temperatur des Mediums geschlossen werden kann, wie weiter unten noch im Detail ausgeführt.

Gemäß einer bevorzugten Weiterbildung der Erfindung wird der Ort der Messung der zweiten Temperatur bewußt derart gewählt, daß die zweite Temperatur anders von der Temperatur des Mediums oder/und der Umgebungstemperatur abhängt als die erste Temperatur.

Gemäß einer bevorzugten Weiterbildung der Erfindung ist ferner vorgesehen, daß die Berechnung der Temperatur des strömenden Mediums auf der Grundlage eines Modells erfolgt, in das die Beeinflussung der ersten Temperatur und der zweiten Temperatur durch die Temperatur des Mediums und durch die Umgebungstemperatur eingeht. Dadurch daß die erste Temperatur und die zweite Temperatur von der Temperatur des Mediums und der Umgebungstemperatur unterschiedlich beeinflußt werden, also unterschiedliche Abhängigkeiten von der Temperatur des Mediums einerseits und der Umgebungstemperatur andererseits zeigen, kann bei gemessener erster Temperatur und gemessener zweiter Temperatur jedem Wertepaar von erster Temperatur und zweiter Temperatur funktional genau ein durch das Modell gegebener Wert für die Temperatur des Mediums zugeordnet werden.

Dabei sind eine Vielzahl von Modellen denkbar. Andererseits können die einem jeweiligen Wertepaar von erster Temperatur und zweiter Temperatur zugeordneten Werte der jeweiligen Temperatur des Mediums auch empirisch ermittelt werden. Gemäß einer bevorzugten Weiterbildung der Erfindung ist jedoch vorgesehen, daß die Berechnung der Temperatur des strömenden Mediums auf der Grundlage folgender Formeln erfolgt:

$$T_1 = a\,T_M + b\,T_U + x,$$

$$T_2 = c\,T_M + d\,T_U + y,$$

wobei $T_1$ die erste Temperatur, $T_2$ die zweite Temperatur, $T_M$ die Temperatur des Mediums und $T_U$ die Umgebungstemperatur ist und a, b, c, d, x und y Konstanten bzw. Funktionen in wenigstens der ersten Temperatur, der zweiten Temperatur, der Temperatur des Mediums bzw. der Umgebungstemperatur sind. In der Regel, jedoch nicht zwingend, kann für x und y ein Wert von 0 angenommen werden. Vorzugsweise ist weiterhin vorgesehen, daß a und c oder/und b und d jeweils voneinander verschieden sind.

Grundsätzlich kann die zweite Temperatur an einer Vielzahl von Orten bestimmt werden. Ein zur Durchführung des erfindungsgemäßen magnetisch-induktiven Durchflußmeßverfahrens verwendetes magnetisch-induktives Durchflußmeßgerät wird jedoch im allgemeinen ein Elektronikgehäuse aufweisen, in dem die Elektronik zur Ansteuerung und Auswertung vorgesehen ist, Dabei ist gemäß einer bevorzugten Weiterbildung der Erfindung vorgesehen, daß die zweite Temperatur in dem Elektronikgehäuse bestimmt wird.

Bei einem Kompaktgerät, bei dem das Elektronikgehäuse am Meßrohr und damit praktisch in unmittelbarer Nähe der Magnetspule vorgesehen ist, wird die zweite, in dem Elektronikgehäuse gemessene Temperatur im Vergleich mit der über den elektrischen Widerstand der Magnetspule bestimmten Temperatur weniger von der Temperatur des Mediums und stärker von der Umgebungstemperatur abhängen. Im Vergleich damit wird die zweite Temperatur bei einem magnetisch-induktiven Durchflußmeßgerät, bei dem das Elektronikgehäuse von dem Meßrohr und damit von der Magnetspule getrennt ist (Remote-Gerät), praktisch überhaupt nicht mehr von der Temperatur des Mediums abhängen.

Bei einem solchen Remote-Gerät ist gemäß einer bevorzugten Weiterbildung der Erfindung im übrigen vorgesehen, daß bei der Ermittlung des Widerstands der Magnetspule der nicht mehr zu vernachlässigende Widerstand der die Magnetspule mit dem Elektronikgehäuse verbindenden Anschlußkabel berücksichtigt wird.

Das erfindungsgemäße Verfahren liefert schon auf die zuvor beschriebene Weise verläßliche Werte für die Temperatur des durch das Meßrohr strömenden Mediums. Gemäß einer bevorzugten Weiterbildung der Erfindung ist jedoch vorgesehen, daß die Eigenwärme der Magnetspule bestimmt wird und zur Korrektur der ersten Temperatur oder/und der berechneten Temperatur des strömenden Mediums verwendet wird. Möglich ist dies z. B. über ein Modell für die Eigenwärme der Magnetspule in Abhängigkeit vom Spulenstrom oder über die empirisch ermittelte Eigenwärme der Magnetspule bei bestimmten Spulenströmen.

Bei Vorhandensein eines Elektronikgehäuses ist es gemäß einer bevorzugten Weiterbildung der Erfindung vorgesehen, daß die Eigenwärme des Elektronikgehäuses bestimmt wird und zur Korrektur der zweiten Temperatur oder/und der berechneten Temperatur des strömenden Mediums verwendet wird. Dabei kann z. B. grundsätzlich so vorgegangen werden, wie zuvor im Zusammenhang mit der Bestimmung der Eigenwärme der Magnetspule beschrieben.

Schließlich ist gemäß einer bevorzugten Weiterbildung der Erfindung vorgesehen, daß die erste Temperatur oder/und die berechnete Temperatur des strömenden Mediums in Abhängigkeit von dem gemessenen Durchfluß des strömenden Mediums korrigiert wird. Es hat sich nämlich gezeigt, daß die erste, über den Widerstand der Magnetspule bestimmte Temperatur auch von dem Durchfluß des strömenden Mediums abhängt, so daß auf diese Weise eine weitere Verbesserung der Bestimmung der Temperatur des strömenden Mediums erfolgen kann.

Ausgehend von dem eingangs beschriebenen magnetisch-induktiven Durchflußmeßgerät ist die weiter oben aufgezeigte Aufgabe dadurch gelöst, daß eine Temperaturmeßeinrichtung zur Bestimmung und Ausgabe einer an einem von dem Ort der Magnetspule verschiedenen Ort bestimmten Temperatur als zweite Temperatur und eine Temperaturberechnungseinrichtung vorgesehen sind, wobei der Temperaturberechnungseinrichtung die erste Temperatur und die zweite Temperatur zugeführt werden und die Temperaturberechnungseinrichtung auf der Grundlage der ersten Temperatur und der zweiten Temperatur die Temperatur des strömenden Mediums berechnet.

Gemäß einer bevorzugten Weiterbildung der Erfindung ist dabei die Temperaturmeßeinrichtung derart ausgebildet und angeordnet, daß die zweite Temperatur anders von der Temperatur des Mediums oder/und der Umgebungstemperatur abhängt als die erste Temperatur.

Weitere bevorzugte Weiterbildungen des erfindungsgemäßen magnetisch- induktiven Durchflußmeßgeräts ergeben sich in Analogie zu den weiter oben beschriebenen bevorzugten Weiterbildungen des erfindungsgemäßen magnetisch-induktiven Durchflußmeßverfahrens.

Im einzelnen gibt es nun eine Vielzahl von Möglichkeiten, das erfindungsgemäße magnetisch-induktive Durchflußmeßverfahren sowie das erfindungsgemäße magnetisch-induktive Durchflußmeßgerät auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt

Fig. 1    die Temperaturabhängigkeit des Widerstands einer für das magnetisch-induktive Durchflußmeßgerät gemäß dem bevorzugten Ausführungsbeispiel der Erfindung verwendbaren Magnetspule und

Fig. 2    schematisch das magnetisch-induktive Durchflußmeßgerät gemäß dem bevorzugten Ausführungsbeispiel der Erfindung.

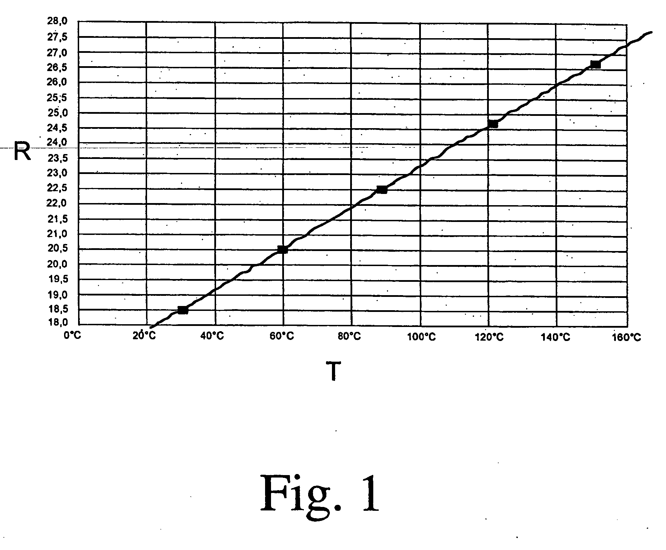

Fig. 1, zeigt den Zusammenhang zwischen der Temperatur T einer für das magnetisch-induktive Durchflußmeßgerät gemäß dem vorliegend beschriebenen bevorzugten Ausführungsbeispiel der Erfindung verwendbaren Magnetspule und dem elektrischen Widerstand R der Magnetspule in Ohm. Deutlich ist erkennbar, daß die als kleine, schwarze Quadrate gekennzeichneten Meßpunkte annähernd ideal auf einer Linie liegen, also ein linearer Zusammenhang zwischen der Temperatur der Magnetspule und dem elektrischen Widerstand der Magnetspule besteht. Wie im folgenden im einzelnen erläutert, kann dies ausgenutzt werden, um mit Hilfe der über den elektrischen Widerstand der Magnetspule erfaßten Temperatur als ersten Temperatur und der an einem von dem Ort der Magnetspule verschiedenen Ort erfaßten Temperatur als zweite Temperatur auf die Temperatur des durch das Meßrohr des magnetisch-induktiven Durchflußmeßgeräts strömenden Mediums zu schließen.

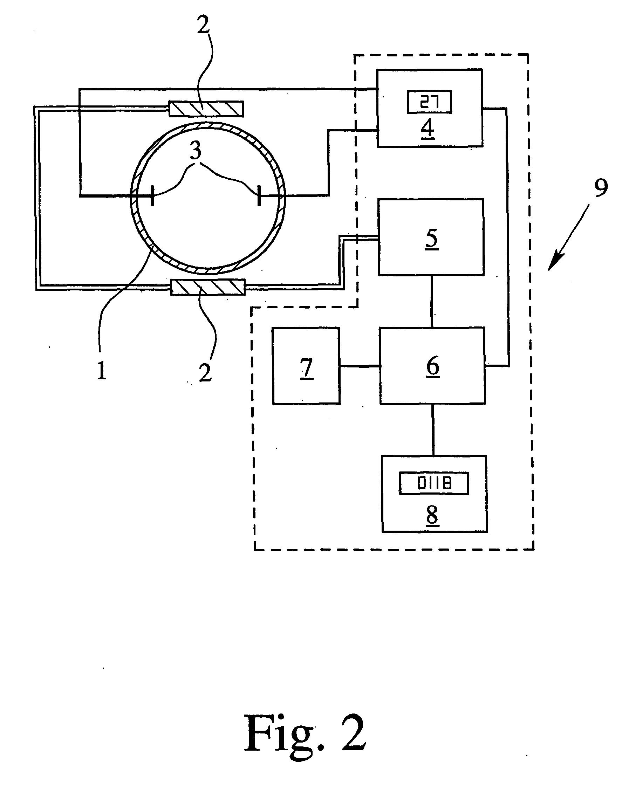

Aus Fig. 2 ist nun schematisch ein magnetisch-induktives Durchflußmeßgerät gemäß dem bevorzugten Ausführungsbeispiel der Erfindung ersichtlich. Dabei ist ein Meßrohr 1 vorgesehen, das zwischen den Magnetspulen 2 einer Helmholtz-Spule angeordnet ist. Mit den Magnetspulen 2 wird ein senkrecht zur Meßrohrachse verlaufendes, zeitlich alternierendes Magnetfeld erzeugt. Aufgrund dieses Magnetfelds wird in dem strömenden Medium eine Spannung induziert. Mit Hilfe von zwei Meßelektroden 3 wird die induzierte Spannung abgegriffen, und die von den Meßelektroden 3 abgegriffene Spannung wird auf eine Durchflußmeßeinrichtung 4 geführt. Vor der Durchflußmeßeinrichtung 4 wird der ermittelte Durchfluß des durch das Meßrohr 1 strömenden Mediums mittels einer Digitalanzeige angezeigt. Nicht weiter dargestellt ist, daß der Meßwert auch über ein ebenfalls nicht weiter dargestelltes BusSystem ausgegeben werden kann.

Weiterhin ist eine Ausgabeeinrichtung 5 zur Ausgabe der auf der Grundlage des gemessenen elektrischen Widerstands der Magnetspulen 2 berechneten Temperatur der Magnetspulen vorgesehen. Dazu ist die Ausgabeeinrichtung 5 mit den beiden Magnetspulen 2 verbunden. Die Ermittlung des elektrischen Widerstands der Magnetspulen 2 erfolgt dabei in bekannter Weise durch eine einfache Strom- und Spannungsmessung. Die Ausgabeeinrichtung 5 wird darüber hinaus für die Stromversorgung der Magnetspulen 2 verwendet.

Aus dem für den elektrischen Widerstand der Magnetspulen 2 ermittelten Wert wird dann, entsprechend der in Fig. 1 gezeigten Relation, auf die Temperatur der Magnetspulen 2 geschlossen, die als erste Temperatur an eine Temperaturberechnungseinrichtung 6 weitergegeben wird. Die Temperaturberechnungseinrichtung 6 ist außerdem mit einer Temperaturmeßeinrichtung 7 verbunden, die zur Bestimmung einer an einem von dem Ort der Magnetspulen 2 verschiedenen Ort bestimmten Temperatur als zweiten Temperatur und Ausgabe derselben an die Temperaturberechnungseinrichtung 6 dient. Als Temperaturmeßeinrichtung 7 ist gemäß dem vorliegend beschriebenen bevorzugten Ausführungsbeispiel der Erfindung ein Temperatursensor vorgesehen, also eine Einrichtung, die eine direkte Temperaturmessung vornimmt.

Auf der Grundlage der der Temperaturberechnungseinrichtung 6 zugeführten ersten Temperatur und zweiten Temperatur wird nun die Temperatur des strömenden Mediums berechnet, und zwar wie folgt:

Die Temperaturmeßeinrichtung 7 ist derart angeordnet, daß die zweite Temperatur anders von der Temperatur des Mediums einerseits und der Umgebungstemperatur andererseits abhängt als die erste Temperatur. Die Magnetspulen 2, über die die erste Temperatur ermittelt wird, sind nämlich wesentlich näher am strömenden Medium vorgesehen als die Temperaturmeßeinrichtung 7, so daß die Magnetspulen 2 auch stärker von der Temperatur des Mediums beeinflußt werden. Bei dem vorliegend beschriebenen bevorzugten Ausführungsbeispiel der Erfindung ist ermittelt worden, daß für die erste Temperatur $T_1$ einerseits und die zweite Temperatur $T_2$ andererseits in guter Näherung gilt:

$$T_1 = 0,7\, T_M + 0,3\, T_U,$$

$$T_2 = 0,2\, T_M + 0,8\, T_U,$$

wobei $T_M$ die Temperatur des Mediums und $T_U$ die Umgebungstemperatur ist. Werden, wie zuvor beschrieben, die erste Temperatur $T_1$ und die zweite Temperatur $T_2$ bestimmt, so erhält man zwei Gleichungen mit zwei Unbekannten. Diese Gleichungssystem läßt sich auf bekannte Weise lösen, so daß auf die Temperatur $T_M$ des strömenden Mediums geschlossen werden kann. Die auf diese Weise in der Temperaturberechnungseinrichtung 6 berechnete Temperatur des strömenden Mediums wird dann an eine Temperaturausgabeeinrichtung 8 weitergegeben und von dieser angezeigt. Andere zusätzliche oder alternative Ausgaben der berechneten Temperatur des strömenden Mediums sind möglich.

In Fig. 2 ist angedeutet, daß sich die Durchflußmeßeinrichtung 4, die Ausgabeeinrichtung 5, die Temperaturberechnungseinrichtung 6, die Temperaturmeßeinrichtung 7 und die Temperaturausgabeeinrichtung 8 in einem Elektronikgehäuse 9 befinden. Aufgrund dieser in dem Elektronikgehäuse 9 vorgesehen Einrichtungen kommt es zu einer Eigenwärme des Elektronikgehäuses 9. Zu einer Verbesserung der berechneten Temperatur des strömenden Mediums kann eine Korrektur bezüglich dieser Eigenwärme des Elektronikgehäuses 9 erfolgen. Dazu ist eine selbst nicht weiter dargestellte Korrektureinrichtung zur Korrektur der berechneten Temperatur des strömenden Mediums in Abhängigkeit von der Eigenwärme des Elektronikgehäuses 9 in die Temperaturberechnungseinrichtung 6 integriert. Die Korrektur beruht darauf, daß die Eigenwärme des Elektronikgehäuses 9 zuvor empirisch ermittelt worden ist und damit bei der Bestimmung der zweiten Temperatur und damit ihrerseits bei der Berechnung der Temperatur des strömenden Mediums berücksichtigt werden kann.

Darüber hinaus ist in die Temperaturberechnungseinrichtung 6 eine ebenfalls nicht weiter im Detail dargestellte Korrektureinrichtung zur Korrektur der berechneten Temperatur des strömenden Mediums in Abhängigkeit von dem gemessenen Durchfluß des strömenden Mediums integriert. Dazu wird der gemessene Durchflußwert von der Durchflußmeßeinrichtung 4 an die Temperaturberechnungseinrichtung 6 weitergegeben. Auf diese Weise kann der Effekt kompensiert werden, daß bei einem größeren Durchfluß des durch das Meßrohr 1 strömenden Mediums eine größere Wärmemenge von den Magnetspulen 2 abgeführt und damit insgesamt eine geringere erste Temperatur bestimmt wird.

Schließlich ist, ebenfalls in die Durchflußmeßeinrichtung 6 integriert und im Detail nicht weiter dargestellt, eine Korrektureinrichtung zur Korrektur der berechneten Temperatur des strömenden Mediums in Abhängigkeit von der Eigenwärme der Magnetspulen 2 selbst vorgesehen. Diese Korrektur erfolgt in Abhängigkeit vom Spulenstrom, wobei zuvor empirisch ermittelt worden ist, wie die Eigenwärme der Magnetspulen 2 von dem Spulenstrom abhängt.

**Patentansprüche**

1.  Magnetisch-induktives Durchflußmeßverfahren zur Messung des Durchflusses eines strömenden Mediums durch ein Meßrohr (1), wobei mit Hilfe wenigstens einer Magnetspule (2) ein Magnetfeld erzeugt wird, das eine senkrecht zur Meßrohrachse verlaufende Magnetfeldkomponente aufweist, der elektrische Widerstand der Magnetspule (2) gemessen wird und als erste Temperatur die Temperatur der Magnetspule auf der Grundlage des gemessenen Widerstands der Magnetspule (2) berechnet wird, **dadurch gekennzeichnet, daß** als zweite Temperatur die Temperatur an einem von dem Ort der Magnetspule (2) verschiedenen Ort bestimmt wird und auf der Grundlage der ersten Temperatur und der zweiten Temperatur die Temperatur des strömenden Mediums berechnet wird, wobei der Ort der Messung der zweiten Temperatur derart gewählt wird, daß die zweite Temperatur anders von der Temperatur des Mediums oder/und der Umgebungstemperatur abhängt als die erste Temperatur.

2.  Magnetisch-induktives Durchflußmeßverfahren nach Anspruch 1, **dadurch gekennzeichnet, daß** die Berechnung der Temperatur des strömenden Mediums auf der Grundlage eines Modells erfolgt, in das die Beeinflussung der ersten Temperatur und der zweiten Temperatur durch die Temperatur des Mediums und durch die Umgebungstemperatur eingeht.

3. Magnetisch-induktives Durchflußmeßverfahren nach Anspruch 2, **dadurch gekennzeichnet, daß** die Berechnung der Temperatur des strömenden Mediums auf der Grundlage folgender Formeln erfolgt:

$$T_1 = a \, T_M + b \, T_U + x,$$

$$T_2 = c \, T_M + d \, T_U + y,$$

wobei $T_1$ die erste Temperatur, $T_2$ die zweite Temperatur, $T_M$ die Temperatur des Mediums und $T_U$ die Umgebungstemperatur ist und a, b, c, d, x und y Konstanten bzw. Funktionen in wenigstens der ersten Temperatur, der zweiten Temperatur, der Temperatur des Mediums bzw. der Umgebungstemperatur sind.

4. Magnetisch-induktives Durchflußmeßverfahren nach Anspruch 3, **dadurch gekennzeichnet, daß** a und c oder/und b und d jeweils voneinander verschieden sind.

5. Magnetisch-induktives Durchflußmeßverfahren nach einem der Ansprüche 1 bis 4, **dadurch gekennzeichnet, daß** ein Elektronikgehäuse (9) vorgesehen ist und die zweite Temperatur in dem Elektronikgehäuse (9) gemessen wird.

6. Magnetisch-induktives Durchflußmeßverfahren nach Anspruch 5, **dadurch gekennzeichnet, daß** die Eigenwärme des Elektronikgehäuses (9) bestimmt und zur Korrektur der zweiten Temperatur oder/und der berechneten Temperatur des strömenden Mediums verwendet wird.

7. Magnetisch-induktives Durchflußmeßverfahren nach einem der Ansprüche 1 bis 6, **dadurch gekennzeichnet, daß** die Eigenwärme der Magnetspule (2) bestimmt wird und zur Korrektur der ersten Temperatur oder/und der berechneten Temperatur des strömenden Mediums verwendet wird.

8. Magnetisch-induktives Durchflußmeßverfahren nach einem der Ansprüche 1 bis 7, **dadurch gekennzeichnet, daß** die erste Temperatur oder/und die berechnete Temperatur des strömenden Mediums in Abhängigkeit von dem gemessenen Durchfluß des strömenden Mediums korrigiert wird.

9. Magnetisch-induktives Durchflußmeßgerät, zur Messung des Volumendurchflusses eines durch ein Meßrohr (1) strömenden Mediums, mit einer Magnetspule (2) zur Erzeugung eines das Meßrohr (1) durchsetzenden Magnetfelds mit einer senkrecht zur Strömungsrichtung verlaufenden Magnetfeldkomponente und einer Ausgabeeinrichtung (5) zur Ausgabe der auf der Grundlage des gemessenen elektrischen Widerstands der Magnetspule (2) berechneten Temperatur der Magnetspule als erste Temperatur, **dadurch gekennzeichnet, daß** eine Temperaturmeßeinrichtung (7) zur Bestimmung und Ausgabe einer an einem von dein Ort der Magnetspule (2) verschiedenen Ort bestimmten Temperatur als zweite Temperatur und eine Temperaturberechnungseinrichtung (6) vorgesehen sind, wobei der Temperaturberechnungseinrichtung (6) die erste Temperatur und die zweite Temperatur zugeführt werden und die Temperaturberechnungseinrichtung (6) auf der Grundlage der ersten Temperatur und der zweiten Temperatur die Temperatur des strömenden Mediums berechnet.

10. Magnetisch-induktives Durchflußmeßgerät nach Anspruch 9, **dadurch gekennzeichnet, daß** die Temperaturmeßeinrichtung (7) derart ausgebildet und angeordnet ist, daß die zweite Temperatur anders von der Temperatur des Mediums oder/und der Umgebungstemperatur abhängt als die erste Temperatur.

11. Magnetisch-induktives Durchflußmeßgerät nach Anspruch 9 oder 10, **dadurch gekennzeichnet, daß** ein Elektronikgehäuse (9) vorgesehen ist und die Temperaturmeßeinrichtung (7) die Temperatur in dem Elektronikgehäuse (9) bestimmt.

12. Magnetisch-induktives Durchflußmeßgerät nach Anspruch 11, **dadurch gekennzeichnet, daß** eine Korrektureinrichtung zur Korrektur der zweiten Temperatur oder/und der berechneten Temperatur des strömenden Mediums in Abhängigkeit von der Eigenwärme des Elektronikgehäuses (9) vorgesehen ist.

13. Magnetisch-induktives Durchflußmeßgerät nach einem der Ansprüche 9 bis 12, **dadurch gekennzeichnet, daß** eine Korrektureinrichtung zur Korrektur der ersten Temperatur oder/und der berechneten Temperatur des strömenden Mediums in Abhängigkeit von der Eigenwärme der Magnetspule (2) vorgesehen ist.

14. Magnetisch-induktives Durchflußmeßgerät nach einem der Ansprüche 9 bis 13, **dadurch gekennzeichnet, daß** eine Korrektureinrichtung zur Korrektur der ersten Temperatur oder/und der berechneten Temperatur des strömenden Mediums in Abhängigkeit von dem gemessenen Durchfluß des strömenden Mediums vorgesehen ist.

## Claims

1. Magnetic-inductive flow measurement method for measuring the flow rate of a medium flowing through a measuring tube (1), at least one magnet coil (2) being used to generate a magnetic field having a magnetic field component which runs perpendicular to the axis of the measuring tube, the electrical resistance of the magnet coil (2) being measured, and the temperature of the magnet coil being calculated, as a first temperature, on the basis of the measured resistance of the magnet coil (2), **characterized in that** the temperature at a location different from the location of the magnet coil (2) is determined as a second temperature, and the temperature of the flowing medium is calculated on the basis of the first temperature and the second temperature, the location at which the second temperature is measured being selected in such a manner that the second temperature depends on the temperature of the medium or/and the ambient temperature to a different extent from the first temperature.

2. Magnetic-inductive flow measurement method according to Claim 1, **characterized in that** the temperature of the flowing medium is calculated on the basis of a model which includes the influence on the first temperature and the second temperature caused by the temperature of the medium and by the ambient temperature.

3. Magnetic-inductive flow measurement method according to Claim 2, **characterized in that** the temperature of the flowing medium is calculated on the basis of the following formulae:

$$T_1 = aT_M + bT_U + x,$$

$$T_2 = cT_M + dT_U + y,$$

where $T_1$ is the first temperature, $T_2$ is the second temperature, $T_M$ is the temperature of the medium, $T_U$ is the ambient temperature, and a, b, c, d, x and y are constants or functions in at least the first temperature, the second temperature, the temperature of the medium and the ambient temperature.

4. Magnetic-inductive flow measurement method according to Claim 3, **characterized in that** a and c or/and b and d are respectively different from one another.

5. Magnetic-inductive flow measurement method according to one of Claims 1 to 4, **characterized in that** an electronics housing (9) is provided and the second temperature is measured in the electronics housing (9).

6. Magnetic-inductive flow measurement method according to Claim 5, **characterized in that** the intrinsic heat of the electronics housing (9) is determined and is used to correct the second temperature or/and the calculated temperature of the flowing medium.

7. Magnetic-inductive flow measurement method according to one of Claims 1 to 6, **characterized in that** the intrinsic heat of the magnet coil (2) is determined and is used to correct the first temperature or/and the calculated temperature of the flowing medium.

8. Magnetic-inductive flow measurement method according to one of Claims 1 to 7, **characterized in that** the first temperature or/and the calculated temperature of the flowing medium is/are corrected on the basis of the measured flow rate of the flowing medium.

9. Magnetic-inductive flowmeter for measuring the volumetric flow rate of a medium flowing through a measuring tube (1), said flowmeter having a magnet coil (2) for generating a magnetic field, which permeates the measuring tube (1) and has a magnetic field component which runs perpendicular to the direction of flow, and an output device (5) for outputting the temperature of the magnet coil, which is calculated on the basis of the measured electrical resistance of the magnet coil (2), as a first temperature, **characterized in that** a temperature-measuring device (7) for determining and outputting a temperature, which is determined at a location different from the location of the magnet coil (2), as a second temperature and a temperature calculation device (6) are provided, the temperature calculation device (6) being supplied with the first temperature and the second temperature and the temperature calculation device (6) calculating the temperature of the flowing medium on the basis of the first temperature and the second temperature.

10. Magnetic-inductive flowmeter according to Claim 9, **characterized in that** the temperature-measuring device (7) is designed and arranged in such a manner that the second temperature depends on the temperature of the medium or/and the ambient temperature to a different extent from the first temperature.

**11.** Magnetic-inductive flowmeter according to Claim 9 or 10, **characterized in that** an electronics housing (9) is provided and the temperature-measuring device (7) determines the temperature in the electronics housing (9).

**12.** Magnetic-inductive flowmeter according to Claim 11, **characterized in that** a correction device for correcting the second temperature or/and the calculated temperature of the flowing medium on the basis of the intrinsic heat of the electronics housing (9) is provided.

**13.** Magnetic-inductive flowmeter according to one of Claims 9 to 12, **characterized in that** a correction device for correcting the first temperature or/and the calculated temperature of the flowing medium on the basis of the intrinsic heat of the magnet coil (2) is provided.

**14.** Magnetic-inductive flowmeter according to one of claims 9 to 13, **characterized in that** a correction device for correcting the first temperature or/and the calculated temperature of the flowing medium on the basis of the measured flow rate of the flowing medium is provided.

**Revendications**

**1.** Procédé pour la mesure magnéto-inductive du débit destiné à mesurer le débit d'un fluide qui écoule à travers un tube de mesure (1), un champ magnétique étant généré à l'aide d'au moins une bobine magnétique (2), lequel présente une composante de champ magnétique qui s'étend perpendiculairement à l'axe du tube de mesure, la résistance électrique de la bobine magnétique (2) étant mesurée et la température de la bobine magnétique étant calculée en tant que première température sur la base de la résistance mesurée de la bobine magnétique (2), **caractérisé en ce que** la température à un emplacement différent de l'emplacement de la bobine magnétique est déterminée en tant que deuxième température et la température du fluide qui s'écoule est calculée en se basant sur la première température et sur la deuxième température, l'emplacement de la mesure de la deuxième température étant choisi de telle sorte que la deuxième température présente une dépendance à la température du fluide et/ou à la température ambiante différente de celle de la première température.

**2.** Procédé pour la mesure magnéto-inductive du débit selon la revendication 1, **caractérisé en ce que** le calcul de la température du fluide qui s'écoule s'effectue sur la base d'un modèle dans lequel intervient l'influence sur la première température et sur la deuxième température par la température du fluide et par la température ambiante.

**3.** Procédé pour la mesure magnéto-inductive du débit selon la revendication 2, **caractérisé en ce que** le calcul de la température du fluide qui s'écoule est réalisé sur la base de la formule suivants :

$$T_1 = aT_M + bT_U + x,$$

$$T_2 = cT_M + dT_U + y,$$

$T_1$ désignant la première température, $T_2$ la deuxième température, $T_M$ la température du fluide et $T_U$ la température ambiante et a, b, c, d, x et y étant des constantes ou des fonctions au moins de la première température, de la deuxième température, de la température du fluide ou de la température ambiante.

**4.** Procédé pour la mesure magnéto-inductive du débit selon la revendication 3, **caractérisé en ce que** a et c et/ou b et d sont respectivement différentes l'une de l'autre.

**5.** Procédé pour la mesure magnéto-inductive du débit selon l'une des revendications 1 à 4, **caractérisé en ce qu'**il est prévu un boîtier électronique (9) et la deuxième température est mesurée dans le boîtier électronique (9).

**6.** Procédé pour la mesure magnéto-inductive du débit selon la revendication 5, **caractérisé en ce que** la chaleur propre du boîtier électronique (9) est déterminée et utilisée pour corriger la deuxième température et/ou la température calculée du fluide qui s'écoule.

**7.** Procédé pour la mesure magnéto-inductive du débit selon l'une des revendications 1 à 6, **caractérisé en ce que** la chaleur propre de la bobine magnétique (2) est déterminée et utilisée pour corriger la première température et/ou la température calculée du fluide qui s'écoule.

**8.** Procédé pour la mesure magnéto-inductive du débit selon l'une des revendications 1 à 7, **caractérisé en ce que** la première température et/ou la température calculée du fluide qui s'écoule sont corrigées en fonction du débit mesuré du fluide qui s'écoule.

**9.** Débitmètre magnéto-inductif destiné à mesurer le débit volumétrique d'un fluide qui écoule à travers un tube de mesure (1), comprenant une bobine magnétique (2) pour générer un champ magnétique qui est appliqué au tube de mesure (1), lequel présente une composante de champ magnétique qui s'étend perpendiculairement au sens de l'écoulement, et un dispositif de sortie (5) pour délivrer la température de la bobine magnétique calculée en tant que première température sur la base de la résistance électrique mesurée de la bobine magnétique (2), **caractérisé en ce qu'**il est prévu un dispositif de mesure de la température (7) pour déterminer et délivrer une température déterminée en tant que deuxième température à un emplacement différent de l'emplacement de la bobine magnétique (2) ainsi qu'un dispositif de calcul de la température (6), la première température et la deuxième température étant acheminées au dispositif de calcul de la température (6) et le dispositif de calcul de la température (6) calculant la température du fluide qui s'écoule en se basant sur la première température et sur la deuxième température.

**10.** Débitmètre magnéto-inductif selon la revendication 9, **caractérisé en ce que** le dispositif de mesure de la température (7) est configuré et disposé de telle sorte que la deuxième température présente une dépendance à la température du fluide et/ou à la température ambiante différente de celle de la première température.

**11.** Débitmètre magnéto-inductif selon la revendication 9 ou 10, **caractérisé en ce qu'**il est prévu un boîtier électronique (9) et le dispositif de mesure de la température (7) détermine la température dans le boîtier électronique (9).

**12.** Débitmètre magnéto-inductif selon la revendication 11, **caractérisé en ce qu'**il est prévu un dispositif de correction pour corriger la deuxième température et/ou la température calculée du fluide qui s'écoule en fonction de la chaleur propre du boîtier électronique (9).

**13.** Débitmètre magnéto-inductif selon l'une des revendications 9 à 12, **caractérisé en ce qu'**il est prévu un dispositif de correction pour corriger la première température et/ou la température calculée du fluide qui s'écoule en fonction de la chaleur propre de la bobine magnétique (2).

**14.** Débitmètre magnéto-inductif selon l'une des revendications 9 à 13, **caractérisé en ce qu'**il est prévu un dispositif de correction pour corriger la première température et/ou la température calculée du fluide qui s'écoule en fonction du débit mesuré du fluide qui s'écoule.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 08014971 A
- US 4651286 A
- DE 10118001 C2